# EUROPEAN PATENT SPECIFICATION

(11) **EP 2 210 914 B1**
(45) Date of publication and mention of the grant of the patent: **31.08.2016**
(21) Application number: 08849303.6
(22) Date of filing: 24.10.2008
(51) Int. Cl.: C08K 5/34, C08K 3/22, C08K 5/3462, C08K 5/3492, C08L 23/00, C09K 21/10

(54) **FLAME RETARDANT COMPOSITION HAVING IMPROVED PROCESSABILITY, FLAME-RETARDANT SYNTHETIC RESIN COMPOSITION, AND MOLDED ARTICLE OF THE FLAME-RETARDANT SYNTHETIC RESIN COMPOSITION**
FEUERFESTE ZUSAMMENSETZUNG VON VERBESSERTER VERARBEITBARKEIT, FEUERFESTE SYNTHETIKHARZZUSAMMENSETZUNG UND GEFORMTER ARTIKEL AUS DER FEUERFESTEN SYNTHETIKHARZZUSAMMENSETZUNG
COMPOSITION IGNIFUGEANTE PRÉSENTANT UNE APTITUDE AU TRAITEMENT AMÉLIORÉE, COMPOSITION DE RÉSINE SYNTHÉTIQUE IGNIFUGEANTE ET ARTICLE MOULÉ FAIT DE LA COMPOSITION DE RÉSINE SYNTHÉTIQUE IGNIFUGEANTE

(30) Priority: 14.11.2007 JP 2007296073
(43) Date of publication of application: 28.07.2010
(73) Proprietor: Adeka Corporation, Tokyo 116-8554 (JP)
(72) Inventor: YAMAKI,Akihiro, Saitama-shi Saitama 336-0022 (JP); KANEDA, Takayoshi, Saitama-shi Saitama 336-0022 (JP); HATANAKA, Tomoyuki, Saitama-shi Saitama 336-0022 (JP); MURASE, Hisashi, Saitama-shi Saitama 336-0022 (JP)
(74) Representative: Forstmeyer, Dietmar
(86) International application number: PCT/JP2008/069297
(87) International publication number: WO 2009/063732

(56) References cited:
- WO-A1-2004/000973
- WO-A1-2005/080494
- JP-A- 2004 238 568
- JP-A- 2008 208 269
- US-A- 5 750 600
- US-A1- 2005 256 234
- US-A1- 2007 176 154

## Description

### Technical Field

The present invention relates to a flame retardant composition that contains, as its essential components, respective (poly/pyro) phosphate compounds of piperazine and melamine, silicone oil, and a monoamide compound of a higher aliphatic carboxylic acid and/or a monoester compound produced by reacting a higher aliphatic carboxylic acid with a monovalent to trivalent alcohol, and more specifically, it relates to a flame retardant composition and a flame-retardant synthetic resin composition using the flame retardant composition having excellent processability, stability, and flame-retardant properties and with which occurrence of "die buildup" during processing can be suppressed, obtained by mixing, to a phosphoric ester compound having a specific structure, silicone oil and a specific amide compound and/or a specific ester compound.

### Background Art

Synthetic resins have excellent chemical and mechanical properties and therefore have conventionally been widely used for building materials, automobile parts, packing materials, agricultural materials, housing materials of home electrical appliances, toys, etc.

However, many of the synthetic resins are flammable substances, and need to undergo flame-retardant treatment depending on their uses. Widely-known methods for imparting flame-retardant properties include using, singly or in combination, at least one of halogen-based flame retardants; inorganic phosphorus-based flame retardants including red phosphorus and polyphosphate-based flame retardants such as ammonium polyphosphate; organic phosphorus-based flame retardants typified by triaryl phosphoric ester compounds; metal hydroxides; flame retardant aids such as antimony oxide; and melamine compounds.

Among the above, halogen-based flame retardants have an excellent effect in imparting flame-retardant properties, but produce harmful substances such as halogen acid gases, dioxins, etc., upon combustion. Therefore, there has been a demand for methods for imparting flame-retardant properties without using halogen-based flame retardants. On the other hand, metal hydroxides, such as magnesium hydroxide, require a large amount thereof to be added before they can impart flame-retardant properties, thus deteriorating resin processability and physical properties of molded articles.

Commonly-used phosphorus-based flame retardants include phosphoric ester compounds having an excellent effect in imparting flame-retardant properties to polycarbonates etc. and inorganic phosphorus-based flame retardants having an excellent effect in imparting flame-retardant properties to polyolefins.

For example, Patent document 1 listed below discloses a flame-retardant resin composition in which ammonium polyphosphate, a multivalent hydroxyl-group-containing compound, a triazine-ring-containing compound, and a metal hydroxide are mixed to a resin.

Patent document 2 and 3 listed below disclose a flame-retardant synthetic resin composition in which melamine polyphosphate and (penta- to tripenta-) erythritol are mixed to a resin.

Patent document 4 listed below discloses a flame-retardant synthetic resin composition containing polybutylene terephthalate (PBT), melamine pyrophosphate, and an aromatic phosphate oligomer.

Patent document 5 and 6 describe that melamine pyrophosphate and other phosphorus-containing compounds are effective in imparting flame-retardant properties to polymers such as PBT.

Patent document 7 discloses a flame retardant produced from melamine, phosphoric anhydride, and piperazine hydrate.

However, the effect of imparting flame-retardant properties to resins of the above-mentioned compositions/compounds is still insufficient. Therefore, there has been a demand for a flame retardant that can impart excellent flame-retardant properties with a small content.

Patent document 1: JP-A-8-176343
Patent document 2: USP 3936416
Patent document 3: USP 4010137
Patent document 4: JP-A-11-152402
Patent document 5: USP 4278591
Patent document 6: USP 5618865
Patent document 7: JP-A-10-183124

Further, Patent document 8 listed below discloses a flame-retardant resin composition in which melamine pyrophosphate, piperazine pyrophosphate, and silicon dioxide are mixed to a resin. The flame-retardant resin composition has an improved flame-retardant effect, but has problems in processing stability (or "die buildup"). Patent document 9 to 12 describe that mixing a phosphoric ester compound of a specific structure to a synthetic resin can provide excellent processing stability. However, those Literatures disclose nothing about the processing stability when the above-mentioned phosphoric ester compound is combined with a flame retardant.

Further, Patent document 13 describes that mixing a specific phosphoric ester compound improves processing stability (or reduces "die buildup"). Although the above phosphoric ester compound provides good stability for a short time, it has poor long-duration continuous stability.

Patent document 8: USP 4599375
Patent document 9: JP-A-54-34355
Patent document 10: JP-A-6-248120
Patent document 11: JP-A-10-60181
Patent document 12: JP-A-2000-160033
Patent document 13: JP-A-2004-238568

US 2005/0256234 discloses a flame retardant composition which comprises two types of phosphate compounds, silicon dioxide or metal oxides, and at least one member selected from higher fatty acids, metal salts of higher fatty acid, higher fatty acid amide compounds, and esters between mono- or polyhydric alcohols and higher aliphatic carboxylic acids.

### Disclosure of Invention

### Problems to be solved by the Invention

"Die buildup" is the large amount of deposits that causes a variety of problems, such as reduction in productivity due to the need to remove such buildup, deterioration of outer appearance or hue due to attachment thereof to molded products, and deterioration of mechanical strength.

Accordingly, an object of the present invention is to provide a flame retardant composition and a flame-retardant synthetic resin composition having excellent processing stability (ability to suppress occurrence of "die buildup") and flame-retardant properties.

### Means for solving the Problems

Inventors have made diligent investigation to achieve the above-mentioned objects, and have found that a flame retardant composition that contains, as its essential components, respective (poly/pyro) phosphate compounds of piperazine and melamine, silicone oil, and a monoamide compound of a higher aliphatic carboxylic acid and/or a monoester compound of a higher aliphatic carboxylic acid can suppress the occurrence of "die buildup" and also has excellent processability and flame-retardant properties, thus arriving at the present invention.

More specifically, the present invention provides a flame retardant composition containing, with respect to a flame retardant composition containing 10 to 90 parts by mass of a salt of piperazine and an inorganic phosphorus compound (component (A)) selected from piperazine phosphate, piperazine pyrophosphate, piperazine polyphosphate, or a mixture of at least two of the piperazine salts, and 90 to 10 parts by mass of a salt of melamine and an inorganic phosphorus compound (component (B)) selected from melamine phosphate, melamine pyrophosphate, melamine polyphosphate, or a mixture of at least two of the melamine salts (wherein the total of the component (A) and the component (B) is 100 parts by mass): 0.1 to 5 parts by mass of silicone oil (component (C)); and 0.05 to 10 parts by mass of a monoamide compound of a higher aliphatic carboxylic acid and/or a monoester compound produced by reacting a higher aliphatic carboxylic acid with a monovalent to trivalent alcohol compound (component (D)), wherein the component (D) is at least one compound selected from a group consisting of erucamide, glycerol monostearate, and montanic acid esters.

The present invention also provides a flame-retardant synthetic resin composition containing 3 to 100 parts by mass of the above-mentioned flame retardant composition with respect to 100 parts by mass of a synthetic resin.

The present invention also provides a shaped article of a flame-retardant synthetic resin composition, produced by shaping the above-mentioned flame-retardant synthetic resin composition.

### Best mode for carrying out the Invention

The flame retardant composition and the flame-retardant synthetic resin composition of the present invention will be described in detail below.

The salt of piperazine and an inorganic phosphorus compound serving as the component (A) of the present invention is selected from piperazine phosphate, piperazine pyrophosphate, and piperazine polyphosphate, which may be used singly or as a mixture.

The proportion of piperazine and the inorganic phosphorus compound (the compositional ratio of the component (A)) is not particularly limited as long as it is within a range that achieves the effect of imparting flame-retardant properties. However, it is preferable that the mole ratio between the nitrogen atoms in piperazine and the phosphorus atoms in the inorganic phosphorus compound is from 1:5 to 5:1, and more preferably from 1:2 to 2:1.

The salt of melamine and an inorganic phosphorus compound serving as the component (B) of the present invention is selected from melamine phosphate, melamine pyrophosphate, and melamine polyphosphate, which may be used singly or as a mixture.

The proportion of melamine and the inorganic phosphorus compound (the compositional ratio of the component (B)) is not particularly limited as long as it is within a range that achieves the effect of imparting flame-retardant properties. However, it is preferable that the mole ratio between the nitrogen atoms in melamine and the phosphorus atoms in the inorganic phosphorus compound is from 1:5 to 5:1, and more preferably from 1:3 to 3:1.

The mass ratio between the component (A) and the component (B) of the present invention is 10:90 to 90:10, and more preferably 30:70 to 70:30.

It is particularly preferable that the silicone oil serving as the component (C) of the present invention has a viscosity at 25°C of preferably 5000 mm2/s or less, and more preferably 3000 mm2/s or less, because such silicone oil has good workability, such as good dispersibility to resin. The amount of the component (C) mixed is from 0.1 to 5 parts by mass, and more preferably 0.5 to 3 parts by mass, with respect to 100 parts by mass of the component (A) and component (B) in total.

It is preferable that the silicone oil has a methylsiloxane structure. Silicone oils having a methylsiloxane structure include: ones that contain the dimethyl polysiloxane structure; ones that contain both the dimethyl polysiloxane structure and the methylhydrogen polysiloxane structure; and ones that contain only the methylhydrogen polysiloxane structure. The silicone oil may be epoxy modified, carboxyl modified, carbinol modified, and/or amino modified.

There is no particular limitation to the method for adding the silicone oil. For example, stirring flame retardant powder and silicone oil while heating the mixture at temperatures of 100 to 150°C will produce a flame retardant composition having an excellent effect of imparting flame-retardant properties and in which secondary aggregation is inhibited and whose adverse effect on processability is suppressed. Other methods for adding the silicone oil include, for example, adding-and-mixing through spraying and drying, mixing granulation, coating, dispersing, kneading, etc., at temperatures of 100 to 150°C.

An example of silicone oil having a dimethyl polysiloxane structure includes "KF-96" (product of Shin-Etsu Chemical Co., Ltd.; viscosity: 3000 mm²/s). An example having a 100% methylhydrogen structure includes "KF-99" (product of Shin-Etsu Chemical Co., Ltd.; viscosity: 20 mm²/s). Examples partially having a methylhydrogen structure include "HMS-151" (product of Gelest Inc.; viscosity: 25 to 35 mm²/s), "HMS-071" (product of Gelest Inc.; viscosity: 25 to 35 mm²/s), "HMS-301" (product of Gelest Inc.; viscosity: 25 to 35 mm²/s), and "DMS-H21" (product of Gelest Inc.; viscosity: 100 mm²/s). Examples of epoxy-modified silicone oils include "X-22-2000" (product of Shin-Etsu Chemical Co., Ltd.: viscosity: 190 mm²/s) and "KF-102" (product of Shin-Etsu Chemical Co., Ltd.; viscosity: 4000 mm²/s). An example of a carbinol-modified silicone oil includes "X-22-4015" (product of Shin-Etsu Chemical Co., Ltd.; viscosity: 130 mm²/s). An example of a carboxyl-modified silicone oil includes "X-22-3071" (product of Shin-Etsu Chemical Co., Ltd.; viscosity: 2000 mm²/s). An example of an amino-modified silicone oil includes "KF-393" (product of Shin-Etsu Chemical Co., Ltd.; viscosity: 20 mm²/s).

Component (D) is at least one compound selected from the group consisting of erucamide, glycerol monostearate, and montanic acid esters.

Examples of monovalent to trivalent alcohol compounds that provide the monoester compound of the component (D) include: monovalent alcohols such as methanol, ethanol, n-propanol, isopropanol, n-butanol, tert-butanol, n-pentanol, isopentanol, tert-pentanol, n-hexanol, tert-hexanol, n-heptanol, isoheptanol, tert-heptanol, n-octanol, 2-ethylhexanol, tert-octanol, n-nonyl alcohol, isononyl alcohol, tert-nonyl alcohol, n-decanol, isodecanol, lauryl alcohol, myristyl alcohol, palmityl alcohol, stearyl alcohol, ethylene glycol monomethyl ether, and diethylene glycol monomethyl ether; divalent alcohols such as ethylene glycol, propylene glycol, 1,2-butanediol, 1,3-butanediol, 1,4-butanediol, 1,5-pentanediol, neopentyl glycol, isoprene glycol (3-methyl-1,3-butanediol), 1,2-hexanediol, 1,6-hexanediol, 3-methyl-1,5-pentanediol, 1,2-octanediol, octanediol (2-ethyl-1,3-hexanediol) 2-butyl-2-ethyl-1,3-propanediol, 1,2-decanediol, 1,2-dodecanediol, 1,2-tetradecanediol, 1,2-hexadecanediol, 1,2-octadecanediol, 1,12-octadecanediol, 1,2-cyclohexanediol, 1,4-cyclohexanediol, 1,4-cyclohexane dimethanol, hydrogenated bisphenol A, sorbide, and methyl diethanolamine; and trivalent alcohols such as glycerol, 1,2,3-butanetriol, 1,2,4-butanetriol, 2-methyl-1,2,3-propanetriol, 1,2,3-pentanetriol, 1,2,4-pentanetriol, 1,3,5-pentanetriol, 2,3,4-pentanetriol, 2-methyl-2,3,4-butanetriol, trimethylol ethane, 2,3,4-hexanetriol, 2-ethyl-1,2,3-butanetriol, trimethylol propane, 4-propyl-3,4,5-heptanetriol, pentamethylglycerol (2,4-dimethyl-2,3,4-pentanetriol), triethanolamine, and triisopropanolamine. Among these, ethylene glycol, propylene glycol, butylene glycol, and glycerol are preferred from the standpoint of cost and workability.

Among the components (D), compounds such as glycerol monostearate, montanic acid hydroxyethyl ester, montanic acid hydroxybutyl ester, and erucamide are preferred because such compounds achieve the effect (of suppressing occurrence of "die buildup") of the present invention excellently.

In the present invention, the amount of the component (D) mixed is from 0.05 to 10 parts by mass, and more preferably 0.1 to 5 parts by mass, with respect to 100 parts by mass of the component (A) and component (B) in total.

Examples of metal oxides serving as the component (E) of the present invention include aluminum oxide, magnesium oxide, silicon oxide, zirconium oxide, vanadium oxide, molybdenum oxide, and surface-treated products thereof. Among these, zinc oxide (ZnO₂), titanium oxide (TiO₂), magnesium oxide (MgO), and silicon oxide (SiO₂) are preferred from the standpoint of their effectiveness as flame retardant aids. For these metal oxides, it is possible to use commercially-available products, such as "Zinc Oxide Type 1" (product of Mitsui Mining and Smelting Co., Ltd.), partially-coated zinc oxide (product of Mitsui Mining and Smelting Co., Ltd.), "NANOFINE 50" (ultrafine zinc oxide particles; average particle diameter: 0.02 µm; product of Sakai Chemical Industry Co., Ltd.), "NANOFINE K" (ultrafine zinc oxide particles coated with zinc silicate; average particle diameter: 0.02 µm; product of Sakai Chemical Industry Co., Ltd.), "TIPAQUE R-680" (titanium oxide; product of Ishihara Sangyo Kaisha, Ltd.), and "Kyowa Mag 150" (magnesium oxide; product of Kyowa Chemical Industry Co., Ltd.).

In the present invention, the amount of the component (E) mixed is preferably from 0.01 to 10 parts by mass, and more preferably 0.1 to 5 parts by mass, with respect to 100 parts by mass of the component (A) and component (B) in total.

There is no particular limitation to the timing for mixing the flame retardant composition of the present invention to the synthetic resin to be imparted with flame-retardant properties. Examples include: blending two or more of the components (A) to (E) into a single pack in advance and then mixing the single-pack components to a synthetic resin; or mixing each component separately to a synthetic resin.

In cases of employing the single-pack method, the flame retardant components may be pulverized in advance before being blended, or they may be blended first and then pulverized together. It is preferable that, at the time those components are finally used as a flame retardant composition, the average particle diameter thereof is 50 µm or less, and more preferably 30 µm or less.

The flame retardant composition of the present invention may contain other flame retardants and/or flame retardant aids, and may further contain the following agents: antioxidants such as phenol-based antioxidants, phosphorus-based antioxidants, and sulfur-based antioxidants; weather-resistance improvers such as UV absorbers and hindered amine compounds; and resin additives such as nucleating agents, heavy-metal deactivators, metal soaps, hydrotalcites, fillers, antistatic agents, slip additives, pigments, antibacterial agents, fungicides, and rodenticides.

Examples of the above-mentioned other flame retardants include halogen-based flame retardants, phosphoric ester-based flame retardants, ammonium polyphosphate, and metal hydroxides such as magnesium hydroxide and aluminum hydroxide.

The above-mentioned flame retardant aids include inorganic flame retardant aids and organic flame retardant aids. Examples of inorganic flame retardant aids include inorganic compounds such as magnesium hydroxide, hydrotalcite, and talc, and surface-treated products thereof. For these inorganic flame retardant aids, it is possible to use commercially-available products, such as "DHT-4A" (hydrotalcite; product of Kyowa Chemical Industry Co., Ltd.), "ALCAMIZER 4" (zinc-modified hydrotalcite; product of Kyowa Chemical Industry Co., Ltd.), and "KISUMA 5A" (magnesium hydroxide; product of Kyowa Chemical Industry Co., Ltd.). Examples of organic flame retardant aids include melamine cyanurate, pentaerythritol, and polytetrafluoroethylene.

The flame retardant aids may be used singly or in combination. Addition of flame retardant aid(s) can help reduce the amount of flame retardant mixed and/or can impart flame-retardant properties that cannot be obtained with the flame retardant alone. Accordingly, it is preferable to use, as appropriate, the flame retardant aid(s) in combination with the flame retardant depending on the type and/or the use of the resin to which the flame retardant is going to be mixed. Anti-drip agents typified by polytetrafluoroethylene are preferred because of their excellent effect of imparting flame-retardant properties. The particle diameter, melting point, viscosity, etc., of the flame retardant aid are selected appropriately so that its powder properties and/or its effect of imparting flame-retardant properties become good.

Examples of the above-mentioned phenol-based antioxidant include 2,6-di-tert-butyl-p-cresol, 2,6-diphenyl-4-octadesiloxyphenol, distearyl(3,5-di-tert-butyl-4-hydroxybenzyl)phosphonate, 1,6-hexamethylene-bis[(3,5-di-tert-butyl-4-hydroxyphenyl)propionic acid amide], 4,4'-thio-bis(6-tert-butyl-m-cresol), 2,2'-methylene-bis(4-methyl-6-tert-butylphenol), 2,2'-methylene-bis(4-ethyl-6-tert-butylphenol), 4,4'-butylidene-bis(6-tert-butyl-m-cresol), 2,2'-ethylidene-bis(4,6-di-tert-butylphenol), 2,2'-ethylidene-bis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl(3,5-di-tert-butyl-4-hydroxyphenyl)propionate, tetrakis[3-(3,5-di-tert-butyl-4-hydroxyphenyl) methyl propionate]methane, thiodiethylene glycol bis[(3,5-di-tert-butyl-4-hydroxyphenyl)propionate], 1,6-hexamethylene-bis[(3,5-di-tert-butyl-4-hydroxyphenyl)propionate], bis[3,3-bis(4-hydroxy-3-tert-butylphenyl)butyric acid] glycol ester, bis[2-tert-butyl-4-methyl-6-(2-hydroxy-3-tert-butyl-5-methylbenzyl)phenyl]terephthalate, 1,3,5-tris[(3,5-di-tert-butyl-4-hydroxyphenyl)propionyloxyethyl] isocyanurate, 3,9-bis[1,1-dimethyl-2-{(3-tert-butyl-4-hydroxy-5-methylphenyl)propionyloxy}ethyl]-2,4,8,10-tetraoxaspiro[5,5]undecane, and triethylene glycol bis[(3-tert-butyl-4-hydroxy-5-methylphenyl)propionate]. With respect to 100 parts by mass of the synthetic resin to which flame-retardant properties are to be imparted, 0.001 to 10 parts by mass, and more preferably 0.05 to 5 parts by mass, of the phenol-based antioxidant is used.

Examples of the above-mentioned phosphorus-based antioxidant include trisnonylphenyl phosphite, tris[2-tert-butyl-4-(3-tert-butyl-4-hydroxy-5-methylphenylthio)-5-methylphenyl] phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidene bis(2-tert-butyl-5-methylphenol) diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylene-bis(4,6-tert-butylphenyl)-2-ethylhexyl phosphite, 2,2'-methylene-bis(4,6-tert-butylphenyl)-octadecyl phosphite, 2,2'-ethylidene-bis(4,6-di-tert-butylphenyl)fluoro phosphite, tris(2-[(2,4,8,10-tetrakis-tert-butyldibenzo[d,f][1,3,2]dioxaphosphepin-6-yl)oxy]ethyl)amine, and a phosphite of 2-ethyl-2-butylpropylene glycol and 2,4,6-tri-tert-butylphenol. With respect to 100 parts by mass of the synthetic resin to which flame-retardant properties are to be imparted, 0.001 to 10 parts by mass, and more preferably 0.05 to 5 parts by mass, of the phosphorus-based antioxidant is used.

Examples of the above-mentioned sulfur-based antioxidant include dialkyl thiodipropionates, such as dilauryl thiodipropionate, dimyristyl thiodipropionate, and distearyl thiodipropionate, and pentaerythritol tetra(β-alkyl mercaptopropionates). With respect to 100 parts by mass of the synthetic resin to which flame-retardant properties are to be imparted, 0.001 to 10 parts by mass, and more preferably 0.05 to 5 parts by mass, of the sulfur-based antioxidant is used.

Examples of the above-mentioned UV absorber include: 2-hydroxybenzophenones such as 2,4-dihydroxybenzophenone, 2-hydroxy-4-methoxybenzophenone, 2-hydroxy-4-octoxybenzophenone, and 5,5'-methylene-bis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylene-bis(4-tert-octyl-6-(benzotriazolyl)phenol), and 2-(2'-hydroxy-3'-tert-butyl-5'-carboxyphenyl)benzotriazole; benzoates such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate, and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and triaryltriazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine. With respect to 100 parts by mass of the synthetic resin to which flame-retardant properties are to be imparted, 0.001 to 10 parts by mass, and more preferably 0.05 to 5 parts by mass, of the UV absorber is used.

Examples of the above-mentioned hindered amine compound include compounds such as 1-oxy-2,2,6,6-tetramethyl-4-hydroxypiperidine, 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl4-piperidyl)-1,2,3,4-butane tetracarboxylate, bis(2,2,6,6-tetramethyl-4-piperidyl) di(tridecyl)-1,2,3,4-butane tetracarboxylate, bis(1,2,2,6,6-pentamethyl-4-piperidyl)-di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis(2,4-bis(N-butyl-N-(2,2,6,6-tetramethyl-4-piperidyl)amino)-s-triazin-6-yl]-1,5,8 ,12-tetraazadodecane, 1,5,8,12-tetrakis[2,4-bis(N-butyl-N-(1,2,2,6,6-pentamethyl-4-piperidyl)amino)-s-triazin-6-yl]-1, 5,8,12-tetraazadodecane, 1,6,11-tris[2,4-bis(N-butyl-N-(2,2,6,6-tetramethyl-4-piperidyl)amino)-s-triazin-6-yl]aminounde cane, and 1,6,11-tris[2,4-bis(N-butyl-N-(1,2,2,6,6-pentamethyl-4-piperidyl)amino)-s-triazin-6-yl]aminoun decane. With respect to 100 parts by mass of the synthetic resin to which flame-retardant properties are to be imparted, 0.001 to 10 parts by mass, and more preferably 0.05 to 5 parts by mass, of the hindered amine compound is used.

Examples of the above-mentioned nucleating agent include: metal salts of benzoic acids such as aluminum p-t-butylbenzoate and sodium benzoate; aromatic phosphoric ester metal salts such as sodium bis(2,4-di-t-butylphenyl)phosphate, sodium methylene-bis(2,4-di-t-butylphenyl)phosphate, and hydroxyaluminum bis[methylene-bis(2,4-di-t-butylphenyl)phosphate]; a mixture of an aromatic phosphoric ester metal salt and an alkali metal compound; dibenzylidene sorbitols such as dibenzylidene sorbitol, bis(methylbenzylidene) sorbitol, and bis(dimethylbenzylidene sorbitol); amino acid metal salts; and rosin acid metal salts. With respect to 100 parts by mass of the synthetic resin to which flame-retardant properties are to be imparted, 0.001 to 10 parts by mass, and more preferably 0.05 to 5 parts by mass, of the nucleating agent is used.

Examples of the above-mentioned heavy-metal deactivator include salicylamide-1,2,4-triazol-3-yl, bis-salicylic hydrazide, dodecanedioyl bis(2-(2-hydroxybenzoyl) hydrazide), and bis(3-(3,5-di-t-butyl-4-hydroxyphenyl)propionic) hydrazide. With respect to 100 parts by mass of the synthetic resin to which flame-retardant properties are to be imparted, 0.001 to 10 parts by mass, and more preferably 0.05 to 5 parts by mass, of the heavy-metal deactivator is used.

The hydrotalcite may be a naturally-occurring product or a synthetic product, and examples thereof include: a basic composite carbonate of magnesium and aluminum; a basic composite carbonate wherein some or all of the magnesium is substituted by an alkali metal; or a basic composite carbonate wherein some or all of the carbonate anion is substituted by another anion such as a perchlorate anion. With respect to 100 parts by mass of the synthetic resin to which flame-retardant properties are to be imparted, 0.001 to 20 parts by mass, and more preferably 0.05 to 10 parts by mass, of the hydrotalcite is used.

Examples of the above-mentioned filler that may be used include known reinforcement materials and fillers for resin, for example: talc, silica, calcium carbonate, mica, glass fiber, carbon fiber, inorganic whiskers such as boron nitride and potassium titanate, and nanoparticulates such as carbon nanotubes and fullerenes. The particle diameter, shape, and whether to apply surface treatment may be selected as appropriate.

Examples of synthetic resins to which flame-retardant properties are to be imparted by the flame retardant of the present invention include: thermoplastic resins, and blends thereof, including: polyolefins and olefin copolymers, e.g., α-olefin polymers such as polypropylene, high-density polyethylene, low-density polyethylene, linear low-density polyethylene, polybutene-1, and poly-3-methylpentene, ethylene-vinyl acetate copolymer, and ethylene-propylene copolymer; halogen-containing resins such as polyvinyl chloride, polyvinylidene chloride, chlorinated polyethylene, chlorinated polypropylene, polyvinylidene fluoride, chlorinated rubber, vinyl chloride-vinyl acetate copolymer, vinyl chloride-ethylene copolymer, vinyl chloride-vinylidene chloride copolymer, vinyl chloride-vinylidene chloride-vinyl acetate terpolymer, vinyl chloride-acrylic ester copolymer, vinyl chloride-maleic ester copolymer, and vinyl chloride-cyclohexyl maleimide copolymer; petroleum resin; coumarone resin; polystyrene; polyvinyl acetate; acrylic resin; copolymers of styrene and/or α-methyl styrene with other monomers (e.g., maleic anhydride, phenyl maleimide, methyl methacrylate, butadiene, acrylonitrile, etc.) (e.g., AS (acrylonitrile-styrene) resin, ABS (acrylonitrile-butadiene-styrene) resin, MBS (methyl methacrylate-butadiene-styrene) resin, heat-resistant ABS resin, etc.); polymethyl methacrylate; polyvinyl alcohol; polyvinyl formal; polyvinyl butyral; linear polyesters such as polyethylene terephthalate and polytetramethylene terephthalate; biodegradable plastics such as polylactic acid; polyphenylene oxide; polyamides such as polycaprolactam and polyhexamethylene adipamide; polycarbonate; branched polycarbonate; polyacetal; polyphenylene sulfide; polyurethane; and cellulose-based resin; as well as thermosetting resins such as phenolic resin, urea resin, melamine resin, epoxy resin, and unsaturated polyester resin. Further, elastomers, such as isoprene rubber, butadiene rubber, acrylonitrile-butadiene copolymer rubber, and styrene-butadiene copolymer rubber, may be used. These resins may be used singly, or two or more of the above-mentioned resins may be used as a synthetic resin composition. Among the above resins, polyolefins and ethylene-vinyl acetate copolymer are preferred; among the polyolefins, polyethylene and polypropylene are preferred.

The flame-retardant synthetic resin composition of the present invention can be obtained by mixing preferably 3 to 100 parts by mass, more preferably 10 to 90 parts by mass, and even more preferably 25 to 80 parts by mass, of the flame retardant composition of the present invention with respect to 100 parts by mass of the above-mentioned synthetic resin.

The effectiveness of the present invention-i.e., the extent to which "die buildup" can be suppressed and the degree of the flame-retardant properties applied to the flame-retardant synthetic resin composition-of the flame retardant composition of the present invention may differ depending on factors such as the density of the synthetic resin to be mixed, the softening point thereof, the proportion of portions insoluble to a solvent, the degree of three-dimensional regularity, presence/absence of catalyst residue, types and content ratio of the starting materials such as the olefins, and types of polymerization catalysts (e.g., Ziegler catalyst, metallocene catalyst, etc.). However, the flame retardant composition of the present invention is effective in all of the above-mentioned resins.

The synthetic resin to which flame-retardant properties are to be imparted by the flame retardant composition of the present invention is preferably stabilized, as necessary, with agents such as phenol-based antioxidants, phosphorus-based antioxidants, thioether-based antioxidants, UV absorbers, and hindered amine-based light stabilizers. It is also possible to add such agents as nucleating agents, antistatic agents, metal soaps, hydrotalcites, fillers, pigments, slip additives, and foaming agents. Specific examples of these resin additives include the above-mentioned compounds that can be mixed to the flame retardant composition.

The shaped article of the flame-retardant synthetic resin composition according to the present invention can be produced by shaping the flame-retardant synthetic resin composition of the present invention. There is no particular limitation to the methods for shaping, and examples thereof include extrusion, calendering, injection molding, rolling, compression molding, and blow molding. Various shaped articles having a variety of shapes can be manufactured, such as resin plates, sheets, films, and odd-form components.

The flame-retardant synthetic resin composition and the flame-retardant synthetic-resin shaped article according to the present invention can be used in a wide variety of industries, such as electricity, electronics, telecommunications, agriculture, forestry, fisheries, mining, construction, foods, textiles, clothing; medical products/services, coal, oil, rubber, leather, automobile, precision instruments, lumber, furniture, printing, and musical instruments.

More specifically, the flame-retardant synthetic resin composition and the flame-retardant synthetic-resin shaped article according to the present invention can be used for: office supplies and office-automation equipment such as printers, personal computers, word processors, keyboards, PDAs (or compact information terminals), telephones, copying machines, facsimile machines, ECRs (electronic cash registers), calculators, electronic organizers, cards, holders, and stationery; home electrical appliances such as washing machines, refrigerators, vacuum cleaners, microwave ovens, lighting fixtures, game machines, irons, and foot warmers; audio-visual equipment such as TVs, videocassette recorders, video cameras, radio-cassette recorders, tape recorders, mini discs, CD players, loudspeakers, and liquid crystal displays; and electrical/electronic components and telecommunications equipment such as connectors, relays, capacitors, switches, printed-circuit boards, coil bobbins, sealing materials for semiconductors, sealing materials for LEDs, electrical wires, cables, transformers, deflection yokes, distribution switchboards, and clocks.

Furthermore, the flame-retardant synthetic resin composition and the flame-retardant synthetic-resin shaped article according to the present invention can be used in various applications such as: materials for automobiles, vehicles, ships, airplanes, and buildings, such as seats (stuffing, outer cloth, etc.), belts, ceiling cladding, convertible tops, armrests, door trims, rear package trays, carpets, mats, sun visors, wheel covers, mattress covers, airbags, insulators, straps, strap belts, wire coverings, electrical insulators, paint, coating materials, overlay materials, floor materials, corner walls, carpets, wallpapers, wall cladding, exterior cladding materials, interior cladding materials, roof materials, acoustical insulation boards, heat-insulating boards, and window materials; and everyday commodities and sporting goods such as clothing, curtains, bed linen, plywood, synthetic fiber boards, rugs, doormats, sheets, buckets, hoses, containers, eyeglasses, bags, cases, goggles, skis, rackets, tents, and musical instruments.

### Examples

The present invention is described in further detail according to Examples etc. thereof The present invention, however, is not limited whatsoever to the following Examples etc.

### Example 1

### Preparation of Flame Retardant Composition

Fifty (50) parts by mass of piperazine pyrophosphate (the ratio of nitrogen atoms in piperazine to phosphorus atoms in pyrophosphoric acid was 1:1) (component (A)) and 50 parts by mass of melamine pyrophosphate (the ratio of nitrogen atoms in melamine to phosphorus atoms in pyrophosphoric acid was 3:1) (component (B)) were placed in a "jet mill" (product of Seishin Enterprise Co., Ltd.; "Co-JET System α-mkIII") and were pulverized at room temperature at a nozzle pressure of 0.8 mPa and at a supply speed of 500 g/hour, to obtain flame retardant powder. To the thus-obtained flame retardant powder were added 1.2 parts by mass of dimethyl silicone oil (component (C); product of Shin-Etsu Chemical Co., Ltd.; product name "KF-96") and 0.7 parts by mass of glycerol monostearate (component (D)), and the mixture was stirred using an "FM mixer" (product of Mitsui Mining Co., Ltd.; "FM 20C/I") at 2800 rpm for 10 minutes at 120°C, to obtain powder of the flame retardant composition of the present invention.

### Preparation of Flame-Retardant Synthetic Resin Composition

To 37.0 parts by mass of low-density polyethylene (product of Japan Polyethylene Corporation; "PES-120"; melt flow index: 1.7 g/10 minutes) and 20.0 parts by mass of ethylene-vinyl acetate resin (product of Tosoh Corporation; "Ultrathene 635") were added 43.0 parts by mass of the flame retardant composition obtained above, 0.2 parts by mass of polytetrafluoroethylene (product of Daikin Industries, Ltd.; "POLYFLON FA-500"), 0.1 parts by mass of tetrakis(3-(3,5-di-tert-butyl-4-hydroxyphenyl)propionyloxymethyl)methane, and 0.1 parts by mass of tris(2,4-di-tert-butylphenyl)phosphite. The mixture was extruded using a Plastomill biaxial extruder at a screw RPM of 75 rpm and a discharge amount of 20 kg/hour at 190°C, to produce the flame-retardant synthetic resin composition of the present invention. The "die buildup" that occurred upon production was collected to perform "die buildup" evaluation (mg/10 minutes).

The pellet-like pieces of flame-retardant synthetic resin composition obtained through extrusion were further injection-molded at 250°C, and the flame-retardant properties thereof were evaluated in accordance with UL-94. The evaluation results are shown in Table 1 below.

### Examples 2 to 8

Respective flame retardant compositions and flame-retardant synthetic resin compositions were prepared and produced and evaluations thereof were performed according to the same conditions as in Example 1 above, except that the amount of piperazine pyrophosphate (component (A)) and the amount of melamine pyrophosphate (component (B)) were respectively fixed to 50 parts by mass and 50 parts by mass and that the contents of component (C) and component (D) were changed to those shown in Table 1 below. The results are also shown in Table 1.

### Comparative Examples 1 to 9

Respective flame retardant compositions and flame-retardant synthetic resin compositions were prepared and produced and evaluations thereof were performed according to the same conditions as in Example 1 above by: using, in place of component (D), higher fatty acids outside the scope of component (D); respectively fixing the amount of piperazine pyrophosphate (component (A)) and the amount of melamine pyrophosphate (component (B)) to 50 parts by mass and 50 parts by mass; and mixing component (C) and each higher fatty acid according to the contents shown in Table 2 below. The results are also shown in Table 2.

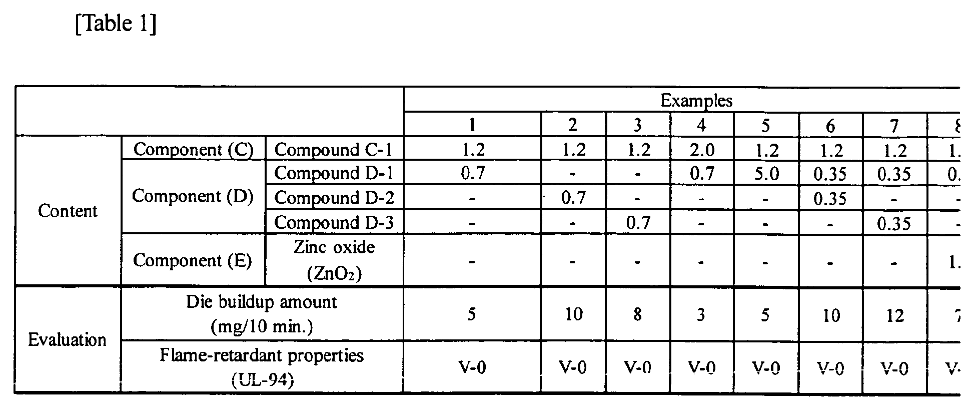

Component (C):
   Compound C-1: dimethyl silicone oil; viscosity: 3000 mm2/s
   (product of Shin-Etsu Chemical Co., Ltd.; product name "KF-96")
Component (D):
   Compound D-1: glycerol monostearate
      (product of Riken Vitamin Co., Ltd.; product name "S-100")
   Compound D-2: erucamide
      (product of Cognis; product name "LOXAMID E")
   Compound D-3: montanic ester (product of Clariant; an ester compound of montanic acid and ethylene glycol and butylene glycol;
      product name "Licowax E")

**[Table 2]**

| | | | Comparative Examples | | | | | | | | |
|---|---|---|---|---|---|---|---|---|---|---|---|
| | | | 1 | 2 | 3 | 4 | 5 | 6 | 7 | 8 | 9 |
| Content | Component (C) | Compound C-1 | - | - 1.2 | - | 1.2 | 1.2 | 1.2 | 1.2 | 1.2 | 1.2 |
| | Higher fatty acid compound | Compound E-1 | - | - | 0.7 | 0.7 | - | - | - | - | - |
| | | Compound E-2 | | | | | 0.7 | | | | |
| | | Compound E-3 | - | - | - | - | - | 0.7 | - | - | - |
| | | Compound E-4 | - | - | - | - | - | - | 0.7 | - | - |
| | | Compound E-5 | - | - | - | - | - | - | - | 0.7 | - |
| | | Compound E-6 | - | - | - | - | - | - | - | - | 0.7 |
| Evaluation | Die buildup amount (mg/10 min.) | | 88 | 83 | 87 | 83 | 58 | 42 | 53 | 52 | 52 |
| | Flame-retardant properties (UL-94) | | V-0 | V-0 | V-0 | V-0 | V-0 | V-0 | V-0 | V-0 | V-0 |

Higher fatty acid compounds:
Compound E-1: ethylene-bis-stearylamide
   (product of Kao Corporation; product name "kao-wax EB-FF")
Compound E-2: glycerol mono- and distearate
   (product of Riken Vitamin Co., Ltd.; "S-100")
Compound E-3: diglycerol mono- and distearate
   (product of Riken Vitamin Co., Ltd.; product name "S-200")
Compound E-4: sorbitan stearate
   (product of Riken Vitamin Co., Ltd.; product name "S-300W")
Compound E-5: sorbitan palmitate
   (product of Riken Vitamin Co., Ltd.; product name "P-300")
Compound E-6: 12-hydroxystearic acid magnesium salt
   (product of Eishin Kasei K. K.; product name "EMS-6P")

Tables 1 and 2 above clearly show that the bis-amide, the diesters, the ester compounds of polyols (tetravalent alcohols), etc., in the Comparative Examples exhibit no effect of suppressing "die buildup" and show that occurrence of "die buildup" can only be suppressed by using, in combination, a monoamide compound and/or a monoester compound of a specific higher fatty acid and silicone oil according to the present invention.

According to the present invention, it is possible to provide a flame-retardant synthetic resin composition having excellent processing stability and flame-retardant properties and with which occurrence of "die buildup" can be suppressed through combined use of a specific higher fatty acid compound and silicone oil.

### Industrial Applicability

According to the present invention, it is possible to provide a flame retardant composition and a flame-retardant synthetic resin composition having excellent long-duration processing stability, having excellent flame-retardant properties with a small amount of flame retardant and without the use of halogen-based flame retardants that produce harmful gases upon combustion, and with which occurrence of "die buildup" during processing can be suppressed, obtained by mixing, to a synthetic resin, a specific phosphate compound, silicone oil, and a monoamide compound of a specific higher aliphatic carboxylic acid and/or a monoester compound produced by reacting a higher aliphatic carboxylic acid with a monovalent to trivalent alcohol compound.

## Claims

1. A flame retardant composition comprising,
with respect to a flame retardant composition containing 10 to 90 parts by mass of a salt of piperazine and an inorganic phosphorus compound (component (A)) selected from piperazine phosphate, piperazine pyrophosphate, piperazine polyphosphate, or a mixture of at least two of said piperazine salts, and 90 to 10 parts by mass of a salt of melamine and an inorganic phosphorus compound (component (B)) selected from melamine phosphate, melamine pyrophosphate, melamine polyphosphate, or a mixture of at least two of said melamine salts (wherein the total of said component (A) and said component (B) is 100 parts by mass):
0.1 to 5 parts by mass of silicone oil (component (C)); and
0.05 to 10 parts by mass of a monoamide compound of a higher aliphatic carboxylic acid and/or a monoester compound produced by reacting a higher aliphatic carboxylic acid with a monovalent to trivalent alcohol compound (component (D)),
wherein
the component (D) is at least one compound selected from a group consisting of erucamide, glycerol monostearate, and montanic acid esters.

2. The flame retardant composition according to claim 1, further comprising a metal oxide (E).

3. The flame retardant composition according to claim 2, wherein the metal oxide (E) is at least one compound selected from a group consisting of zinc oxide (ZnO₂), titanium oxide (TiO₂), magnesium oxide (MgO), and silicon oxide (SiO₂).

4. A flame-retardant synthetic resin composition comprising 3 to 100 parts by mass of the flame retardant composition according to any one of claims 1 to 3 with respect to 100 parts by mass of a synthetic resin.

5. The flame-retardant synthetic resin composition according to claim 4, wherein the synthetic resin is a polyolefin and/or ethylene-vinyl acetate copolymer.

6. The flame-retardant synthetic resin composition according to claim 4 or 5, wherein the polyolefin is polypropylene and/or polyethylene.

7. A shaped article of a flame-retardant synthetic resin composition, produced by shaping the flame-retardant synthetic resin composition according to any one of claims 4 to 6.

## Patentansprüche

1. Flammhemmende Zusammensetzung umfassend:
bezogen auf eine flammhemmende Zusammensetzung enthaltend 10 bis 90 Massenteile eines Salzes von Piperazin und einer anorganischen Phosphorverbindung (Komponente (A)), die ausgewählt wird aus Piperazinphosphat, Piperazinpyrophosphat, Piperazinpolyphosphat oder einer Mischung von mindestens zwei der genannten Piperazinsalze und 90 bis 10 Massenteile eines Salzes von Melamin und einer anorganischen Phosphorverbindung (Komponente (B)), die ausgewählt wird aus Melaminphosphat, Melaminpyrophosphat, Melaminpolyphosphat oder einer Mischung von mindestens zwei der genannten Melaminsalze (wobei die Gesamtmenge der genannten Komponente (A) und der genannten Komponente (B) 100 Massenteile beträgt):
0,1 bis 5 Massenteile Silikonöl (Komponente (C)); und
0,05 bis 10 Massenteile einer Monoamidverbindung einer höheren aliphatischen Carbonsäure und/oder eine Monoesterverbindung, hergestellt durch Umsetzung einer höheren aliphatischen Carbonsäure mit einer monovalenten bis trivalenten Alkoholverbindung (Komponente (D)),
wobei
Komponente (D) mindestens eine Verbindung ist, die ausgewählt wird aus der Gruppe bestehend aus Erucamid, Glycerolmonostearat und Montansäureestern.

2. Flammhemmende Zusammensetzung nach Anspruch 1, die weiterhin ein Metalloxid (E) umfasst.

3. Flammhemmende Zusammensetzung nach Anspruch 2, wobei das Metalloxid (E) mindestens eine Verbindung ist, die ausgewählt wird aus der Gruppe bestehend aus Zinkoxid (ZnO₂), Titanoxid (TiO₂), Magnesiumoxid (MgO) und Siliziumoxid (SiO₂).

4. Flammhemmende synthetische Harzzusammensetzung umfassend 3 bis 100 Massenteile der flammhemmenden Zusammensetzung nach einem der Ansprüche 1 bis 3, bezogen auf 100 Massenteile eines synthetischen Harzes.

5. Flammhemmende synthetische Harzzusammensetzung nach Anspruch 4, wobei das synthetische Harz ein Polyolefin und/oder Ethylen-Vinylacetat Copolymer ist.

6. Flammhemmende synthetische Harzzusammensetzung nach Anspruch 4 oder 5, wobei das Polyolefin Polypropylen und/oder Polyethylen ist.

7. Geformter Artikel aus einer flammhemmenden synthetischen Harzzusammensetzung, hergestellt durch Formen der flammhemmenden synthetischen Harzzusammensetzung nach einem der Ansprüche 4 bis 6.

## Revendications

1. Composition ignifuge comprenant,
par rapport à la composition ignifuge contenant de 10 à 90 parties en masse d'un sel de pipérazine et d'un composé phosphoré inorganique (composant (A)) choisi parmi le phosphate de pipérazine, le pyrophosphate de pipérazine, le polyphosphate de pipérazine, ou un mélange d'au moins deux desdits sels de pipérazine, et de 90 à 10 parties en masse d'un sel de mélamine et d'un composé phosphoré inorganique (composant (B)) choisi parmi le phosphate de mélamine, le pyrophosphate de mélamine, le polyphosphate de mélamine, ou un mélange d'au moins deux desdits sels de mélamine (le total dudit composant (A) et dudit composant (B) étant de 100 parties en masse) :
de 0,1 à 5 parties en masse d'huile de silicone (composant (C)) ; et
de 0,05 à 10 parties en masse d'un composé monoamide d'un acide carboxylique aliphatique supérieur et/ou d'un composé monoester produit en faisant réagir un acide carboxylique aliphatique supérieur avec un composé alcoolique monovalent à trivalent (composant (D)),
dans laquelle
le composant (D) est au moins un composé choisi dans le groupe constitué par l'érucamide, le monostéarate de glycérol et les esters d'acide montanique.

2. Composition ignifuge selon la revendication 1, comprenant en outre un oxyde métallique (E).

3. Composition ignifuge selon la revendication 2, dans laquelle l'oxyde métallique (E) est au moins un composé choisi dans le groupe constitué par l'oxyde de zinc (ZnO₂), l'oxyde de titane (TiO₂), l'oxyde de magnésium (MgO) et l'oxyde de silicium (SiO₂).

4. Composition de résine synthétique ignifuge comprenant de 3 à 100 parties en masse de la composition ignifuge selon l'une quelconque des revendications 1 à 3 par rapport à 100 parties en masse d'une résine synthétique.

5. Composition de résine synthétique ignifuge selon la revendication 4, dans laquelle la résine synthétique est une polyoléfine et/ou un copolymère d'éthylène-acétate de vinyle.

6. Composition de résine synthétique ignifuge selon la revendication 4 ou 5, dans laquelle la polyoléfine est un polypropylène et/ou un polyéthylène.

7. Article moulé d'une composition de résine synthétique ignifuge, produit par moulage de la composition de résine synthétique ignifuge selon l'une quelconque des revendications 4 à 6.
